(19) Europäisches Patentamt
European Patent Office
Office européen des brevets

(11) EP 1 380 416 A2

(12) EUROPÄISCHE PATENTANMELDUNG

(43) Veröffentlichungstag:
**14.01.2004 Patentblatt 2004/03**

(51) Int Cl.$^7$: **B32B 27/36**

(21) Anmeldenummer: **03014690.6**

(22) Anmeldetag: **27.06.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **10.07.2002 DE 10230983**

(71) Anmelder: **Bayer Aktiengesellschaft**
**51368 Leverkusen (DE)**

(72) Erfinder:
- **Gorny, Rüdiger, Dr.**
  **Moon Twp., PA 15108 (US)**
- **Anders, Siegfried, Dr.**
  **51147 Köln (DE)**
- **Nising, Wolfgang, Dr.**
  **53757 St. Augustin (DE)**
- **Röhner, Jürgen**
  **51069 Köln (DE)**
- **Roelofs, Marco**
  **47807 Krefeld (DE)**
- **Kratschmer, Silke, Dr.**
  **60488 Frankfurt (DE)**

# (54) Mehrschichtiges Erzeugnis enthaltend Polycarbonat

(57) Die Erfindung betrifft ein mehrschichtiges Erzeugnis umfassend eine erste und eine zweite Schicht, wobei die erste Schicht ein Copolycarbonat enthält und wobei dieses Copolycarbonat Wiederholungseinheiten der Formel (I)

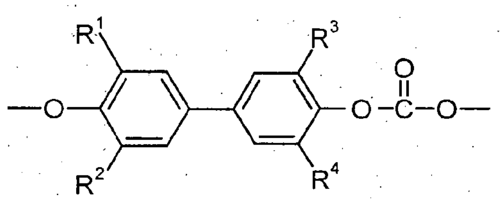

(I)

enthält, worin $R^1$ bis $R^4$ unabhängig voneinander für H, $C_1$-Alkyl bis $C_4$-Alkyl, Phenyl, substituiertes Phenyl oder Halogen stehen, und Wiederholungseinheiten der Formel (II)

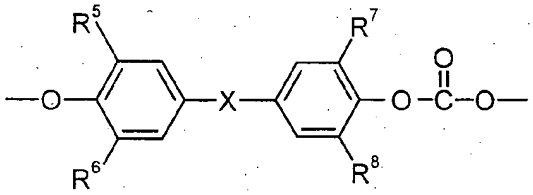

(II)

enthält, worin $R^5$ bis $R^8$ unabhängig voneinander H, $CH_3$, Cl oder Br sind und X $C_1$-Alkylen bis $C_5$-Alkylen, $C_2$-Alkyliden bis $C_5$-Alkyliden, $C_5$-Cycloalkylen bis $C_6$-Cycloalkylen, oder $C_5$-Cycloalkyliden bis $C_{10}$-Cycloalkyliden ist, und wobei die zweite Schicht ein Polycarbonat enthält, das weniger chemikalienresistent ist, als das Copolycarbonat, das in der ersten Schicht enthalten ist. Außerdem betrifft die Erfindung die Herstellung dieser mehrschichtigen Erzeugnisse durch Coextrusion und sie betrifft Erzeugnisse, wie z.B. Verscheibungen, die diese mehrschichtigen Erzeugnisse enthalten.

EP 1 380 416 A2

**Beschreibung**

Die vorliegende Erfindung betrifft ein mehrschichtiges Erzeugnis umfassend eine erste und eine zweite Schicht, wobei die erste Schicht ein bestimmtes Copolycarbonat enthält, und wobei die zweite Schicht ein Polycarbonat enthält, das weniger chemikalienresistent ist, als das Copolycarbonat, das in der ersten Schicht enthalten ist. Außerdem betrifft die Erfindung die Herstellung dieser mehrschichtigen Erzeugnisse durch Coextrusion und sie betrifft Erzeugnisse, wie z.B. Verscheibungen, die die genannten mehrschichtigen Erzeugnisse enthalten.

Bisphenol-A Homopolycarbonat hat den Nachteil, für einige Anwendungen nicht ausreichend chemikalienresistent zu sein. Dies gilt auch für viele andere Polycarbonate auf Basis anderer Dihydroxyverbindungen als Bisphenol A.

Copolycarbonate, die 4,4'-Dihydroxydiphenylen (DOD) beinhalten, (sogenannte DOD-Copolycarbonate, auch DOD-CoPC genannt) haben eine höhere Chemikalienresistenz als Bisphenol-A Homopolycarbonat. Diese DOD-CoPC können in einigen Anwendungen jedoch nicht verwendet werden, da sie teurer sind als Bisphenol-A Homopolycarbonat und da sie in anderen Eigenschaften dem Bisphenol-A Homopolycarbonat unterlegen sind.

Platten mit guter Chemikalienresistenz sind bekannt. Sie werden beispielsweise aus Polyethylenterephthalat (PET) oder Copolyestern wie z.B. PETG oder Polymethylmethacrylat (PMMA) hergestellt.

Die genannten Polymere haben jedoch deutlich geringere Kerbschlagzähigkeiten als Bisphenol-A Homopolycarbonat und sind daher nicht für alle Anwendungen geeignet.

Es ist bekannt, Bisphenol-A Homopolycarbonat für Platten zu verwenden, die chemikalienresistent sein sollen. In diesen Fällen wird entweder ein chemisch resistenter Lack auf das Polycarbonat aufgebracht oder eine Folie aus einem chemisch resistenten Material auflaminiert.

Es ist auch bekannt, Blends des Bisphenol-A Homopolycarbonats mit anderen Polymeren statt reinem Bisphenol-A Homopolycarbonat zu verwenden, um die Chemikalienresistenz zu erhöhen. Diese Blends haben den Nachteil, dass sie in vielen Fällen entweder nicht transparent sind oder zumindest eine merkliche Trübung aufweisen. Die transparenten Polycarbonat-Blends weisen Kerbschlagzähigkeiten deutlich unterhalb derjenigen von Bisphenol-A Homopolycarbonat auf.

Im folgenden wird weiterer Stand der Technik zu mehrschichtigen Erzeugnissen zusammengefasst.

EP-A 0 110 221 offenbart Platten aus zwei Schichten Polycarbonat, wobei eine Schicht wenigstens 3 Gew.-% eines UV-Absorbers enthält. Die Herstellung dieser Platten kann gemäß EP-A 0 110 221 durch Coextrusion erfolgen.

EP-A 0 320 632 offenbart Formkörper aus zwei Schichten aus thermoplastischem Kunststoff, bevorzugt Polycarbonat, wobei eine Schicht spezielle substituierte Benzotriazole als UV-Absorber enthält. EP-A 0 320 632 offenbart auch die Herstellung dieser Formkörper durch Coextrusion.

EP-A 0 247 480 offenbart mahrschichtige Platten, in denen neben einer Schicht aus thermoplastischem Kunststoff eine Schicht aus verzweigtem Polycarbonat vorhanden ist, wobei die Schicht aus Polycarbonat spezielle substituierte Benzotriazole als UV-Absorber enthält. Die Herstellung dieser Platten durch Coextrusion wird ebenfalls offenbart.

EP-A 0 500 496 offenbart Polymerzusammensetzungen, die mit speziellen Triazinen gegen UV-Licht stabilisiert sind und deren Verwendung als Außenschicht in Mehrschichtsystemen. Als Polymere werden Polycarbonat, Polyester, Polyamide, Polyacetale, Polyphenylenoxid und Polyphenylensulfid genannt.

EP-A 0 825 226 offenbart Zusammensetzungen aus Polycarbonat, substituierten Arylphosphiten und substituierten Triazinen. EP-A 0 825 226 offenbart auch mehrschichtige Platten, in denen eine Schicht aus der genannten Zusammensetzung besteht.

JP-A 02 028 239 offenbart eine Folie aus Polyvinylidenfluorid und einem Polymethacrylat. Ein Nachteil der Folie ist, dass Polyvinylidenfluorid teuerer ist als Polycarbonat.

Z.B. JP-A 11 323 255 offenbart einen Siloxanlack mit Perfluoroalkyl-Additiven, der auf Polycarbonat aufgebracht werden kann, um dieses chemisch resistenter zu machen.

US-A 6 011 124 offenbart eine Polymermischung (Blend) aus einem Polyester und einem Polycarbonat. Diese Mischung hat den Vorteil, dass sie chemisch resistenter ist als Polycarbonat. Diese Mischung hat den Nachteil, dass sie eine geringere Kerbschlagzähigkeit besitzt als Polycarbonat.

EP-A 0 544 407, US-A 5 532 324, US-A 5 470 938 und US-A 5 401 826 offenbaren Copolycarbonate auf Basis der Bisphenole 4,4'-Dihydroxydiphenyl-und 2,2-Bis(4-hydroxyphenyl)propan. EP-A 0 544 407, US-A 5 532 324, US-A 5 470 938 und US-A 5 401 826 offenbaren auch, dass diese Copolycarbonate resistent gegen Benzin sind, hitzebeständig und schwer entflammbar sind und dass die mechanischen Eigenschaften und die Transparenz dieser Copolycarbonate mit denen bekannter Polycarbonate vergleichbar sind.

Der vorliegenden Erfindung liegt die Aufgabe zugrunde, Erzeugnisse zur Verfügung zu stellen, die eine bessere Chemikalienresistenz aufweisen, als es bei Erzeugnissen aus Bisphenol-A Homopolycarbonat der Fall ist. Dabei sollen die guten Eigen-Schatten der Erzeugnisse aus Bisphenol-A Homopolycarbonat, wie z.B. ihre guten mechanischen und optischen Eigenschaften, möglichst nicht beeinträchtigt werden.

Diese Aufgabe wird gelöst durch ein mehrschichtiges Erzeugnis umfassend eine erste und eine zweite

Schicht, wobei die erste Schicht ein Copolycarbonat enthält und wobei dieses Copolycarbonat zu 0,1 Mol-% bis 46 Mol-%, vorzugsweise zu 11 Mol-% bis 34 Mol-% und insbesondere zu 26 Mol-% bis 34 Mol-%, eine oder mehrere verschiedene Wiederholungseinheiten der Formel

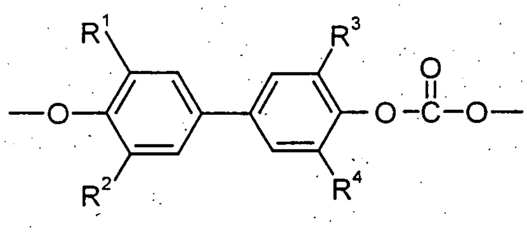

(I)

enthält, worin $R^1$ bis $R^4$ unabhängig voneinander für H, $C_1$-Alkyl bis $C_4$-Alkyl, Phenyl, substituiertes Phenyl oder Halogen stehen, und zu 99,9 Mol-% bis 54 Mol-%, vorzugsweise 89 Mol-% bis 66 Mol-% und insbesondere 74 Mol-% bis 66 Mol-%, eine oder mehrere verschiedene Wiederholungseinheiten der Formel (II)

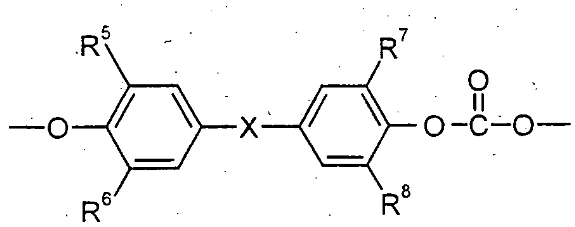

(II)

enthält, worin $R^5$ bis $R^8$ unabhängig voneinander H, $CH_3$, Cl oder Br sind und X $C_1$-Alkylen bis $C_5$-Alkylen, $C_2$-Alkyliden bis $C_5$-Alkyliden, $C_5$-Cycloalkylen bis $C_6$-Cycloalkylen, oder $C_5$-Cycloalkyliden bis $C_{10}$-Cycloalkyliden ist, und wobei die Summe der Menge der Wiederholungseinheiten nach Formel (I) und nach Formel (II) 100 Mol-% beträgt, und wobei die zweite Schicht ein Polycarbonat enthält, das weniger chemikalienresistent ist als das Copolycarbonat, das in der ersten Schicht enthalten ist.

$R^1$ bis $R^4$ stehen bevorzugt unabhängig voneinander für H, $C_1$-$C_4$-Alkyl oder Halogen und besondere bevorzugt alle für den gleichen Rest, insbesondere für H oder tert.-Butyl.

Besonders bevorzugt sind Copolycarbonate aufgebaut aus 34-26 Mol'%, speziell 33-27 Mol-%, insbesondere 32-28 Mol-%, ganz speziell 31-29 Mol-% und besonders herausgehoben 30 Mol-% an Monomer der Formel (I), jeweils durch einen komplementären Gehalt an Monomer der Formel (II) ergänzt.

Bevorzugte Wiederholungseinheiten der Formel (I) sind abgeleitet von 4,4'-Dihydroxydiphenyl (DOD) und 4,4'-Dihydroxy-3,3',5,5'tetra(tert.-Butyl)diphenyl.

Bevorzugte Wiederholungseinheiten der Formel (II) sind abgeleitet von 2,2-Bis(4-hydroxyphenyl)propan, 1,1 -Bis(4-hydroxyphenyl)-3,3,5-trimethylcyclohexan und 1,3-Bis[2-(4-hydroxyphenyl)-2-propyl]benzol, 1,1 Bis(4-hydroxyphenyl)- 1 -phenylethan, 1,1-Bis(4-hydroxyphenyl)-cyclohexan, insbesondere 2,2-Bis(4-hydroxyphenyl)propan (Bisphenol A).

Es können sowohl eine Wiederholungseinheit der Formel (I), unter Bildung binärer Copolycarbonate, als auch mehrere Wiederholungseinheit der Formel (I) verwendet werden.

Ebenso können sowohl eine Wiederholungseinheit der Formel (II), unter Bildung binärer Copolycarbonate, als auch mehrere Wiederholungseinheit der Formel (II) verwendet werden.

Besonders-bevorzugt sind Copolycarbonate, bei denen die Wiederholungseinheit der Formel (I) von 4,4'-Dihydroxydiphenyl (DOD) abgeleitet ist und bei denen die Wiederholungseinheit der Formel (II) Bisphenol A ist.

Die genannte erste Schicht hat bevorzugt eine Dicke von 1 bis 1 000 µm, insbesondere 10 bis 500 µm, insbesondere 10 bis 200 µm, insbesondere 15 bis 60 µm.

Die genannte zweite Schicht kann in geringen Anteilen, bevorzugt weniger als 10 Gew.-%, neben anderen Polycarbonaten auch das Copolymere enthalten, das in der ersten Schicht enthalten ist

Dieses mehrschichtige Erzeugnis ist Gegenstand der vorliegenden Erfindung.

Weiterhin ist Gegenstand der vorliegenden Erfindung ein Verfahren zur Herstellung dieses mehrschichtigen Erzeugnisses durch Coextrusion.

Weiterhin ist Gegenstand der vorliegenden Erfindung ein Erzeugnis, das das genannte mehrschichtige Erzeugnis enthält. Dabei ist dieses Erzeugnis, das das genannte mehrschichtige Erzeugnis enthält, bevorzugt ausgewählt aus der Gruppe bestehend aus Verscheibung, Schutzscheibe, Wintergarten, Veranda, Carport, Bushaltestelle, Reklametafel, Vitrine, Fenster, Trennwand, Kassenhaus, Sichtscheibe, Display, Überdachung und Folie.

Die genannten Verscheibungen können z.B. Verscheibungen für Automobile oder für Gewächshäuser oder für Tankstellen oder für Laboratorien oder für chemische Betriebe sein.

Die genannten Schutzscheiben können z.B. Schutzscheiben in Laboratorien sein.

Die genannten Schutzscheiben können zum Beispiel als Einhausungen von Maschinen dienen, um vor umherfliegenden Teilen, die sich lösen können, zu schützen. Solche Schutzscheiben werden z.B. als Ersatz für Stahlkäfige verwendet.

Die genannten Sichtscheiben können z.B. Sichtscheiben in Theken oder Schaukästen sein. Die genannten Sichtscheiben können z.B. in der Lebensmittelbranche eingesetzt werden.

Die für die vorliegende Erfindung verwendete Definition der Anteile der Wiederholungseinheiten am erfindungsgemäßen Copolycarbonat ist wie folgt. Ein Anteil von n Mol-% bedeutet eine Anteil von n Mol-% bezogen auf die Summe der Anteile aller im Copolycarbonat vorhandenen Wiederholungseinheiten. Beträgt der Anteil 100 Mol-%, dann sind also keine anderen Wiederholungseinheiten vorhanden.

Das erfmdungsgemäße mehrschichtige Erzeugnis hat zahlreiche Vorteile. Insbesondere hat es den Vorteil, chemisch resistent zu sein. Außerdem hat es den Vorteil, eine hohe Schlagzähigkeit und Kerbschlagzähigkeit und eine hohe Wärmeformbeständigkeit zu besitzen. Außerdem ist es leicht und kostengünstig herstellbar. Außerdem sind die Ausgangsstoffe leicht und verfügbar und vergleichsweise kostengünstig. Auch die übrigen positiven Eigenschaften des Polycarbonats, zum Beispiel seine guten optischen Eigenschaften, werden in dem erfindungsgemäßen mehrschichtigen Erzeugnis nicht oder nur unwesentlich beeinträchtigt.

Das erfindungsgemäße mehrschichtige Erzeugnis hat weitere vorteile gegenüber dem Stand der Technik. Das erfindungsgemäße mehrschichtige Erzeugnis ist durch Coextrusion herstellbar. Damit ergeben sich Vorteile gegenüber eines durch Lackierung hergestellten Erzeugnisses. So verdampfen bei der Coextrusion keine Lösungsmittel, wie dies bei Läckierungen der Fall ist.

Eine Lackierung bringt außerdem Fremdpolymer in das lackierte Erzeugnis ein. Dies bedeutet zum Beispiel, dass beim Recycling das Erzeugnis keinen sortenreinen Kunststoff mehr darstellt. Diesen Nachteil hat die Coextrusion nicht.

Außerdem können Lacke nicht lange lagern. Diesen Nachteil hat die Coextrusion nicht.

Außerdem erfordern Lacke eine aufwendige Technik. Zum Beispiel erfordern sie teilweise explosionsgeschützte Aggregate, das Recycling von Lösungsmitteln, und damit teure Investitionen in Anlagen. Diesen Nachteil hat die Coextrusion nicht.

Gegenüber eines durch Laminierung hergestellten Erzeugnisses hat das erfindungsgemäße mehrschichtige Erzeugnis zahlreiche Vorteile, weil es durch Coextrusion herstellbar ist.

Bei der Laminierung muss zunächst in einem separaten Schritt eine Folie hergestellt werden. Diesen Nachteil hat die Coextrusion nicht.

Außerdem ist die Coextrusion einfach und das erforderliche Know-How ist leicht zugänglich. Die Laminierung ist schwieriger weil sich Blasen oder Verwerfungen der Folien bilden können.

Außerdem können durch Coextrusion leicht Platten mit Breiten von bis zu 2,2 Meter Breite hergestellt werden. Demgegenüber sind die Folien für die Laminierung meist nur in einer Breite von maximal 1,6 Meter verfügbar.

Eine bevorzugte Ausführungsform der vorliegenden Erfindung ist das mehrschichtige Erzeugnis, wobei die Wiederholungseinheit den der Formel (I) abgeleitet sind von 4,4'-Dihydroxydiphenyl (DOD), und wobei die Widerholungseinheiten der Formel (II) abgeleitet sind von 2,2-Bis(4-hydroxyphenyl)propan, und wobei der Anteil der Wiederholungseinheiten der Formel (I) an dem Copolycarbonat 26 bis 34,Mol-% beträgt, und wobei der Anteil der Wiederholungseinheiten der Formel (II) an dem Copolycarbonat 74 bis 66 Mol-% beträgt, und wobei die Summe der Menge der Wiederholungseinheiten nach Formel (I) und nach Formel (II) 100 Mol-% beträgt.

Erfindungsgemäß sind diejenigen mehrschichtigen Erzeugnis bevorzugt, bei denen eine Schicht zusätzlich 1 bis 20 Gew.-% UV-Absorber enthält. Dabei ist der UV-Absorber bevorzugt ausgewählt aus der Gruppe bestehend aus Tinuvin® 360, Tinuvin® 1577 und Uvinul®-3030. Diese haben folgende Struktur:

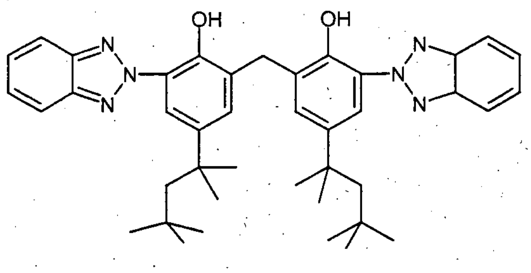

Tinuvin® 360

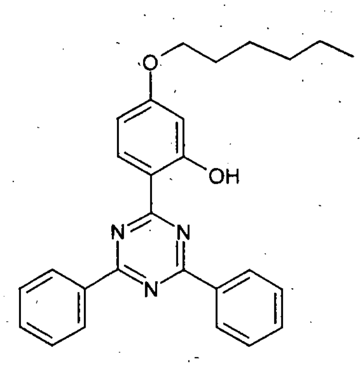

Tinuvin® 1577

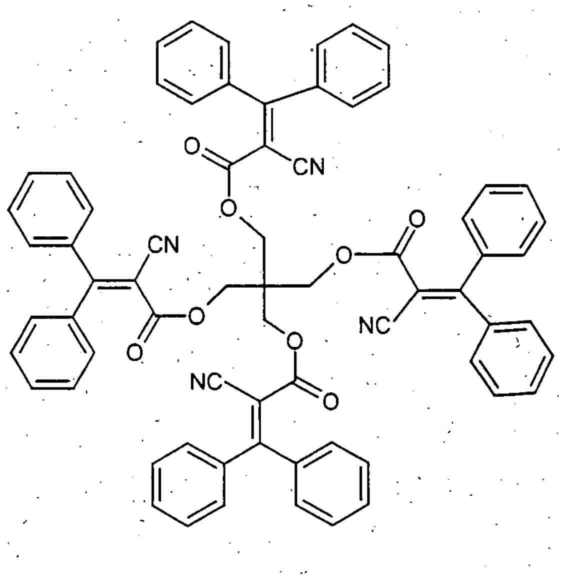

Univul® 3030

Die andere Schicht kann bevorzugt 0 bis 1 Gew.-% UV-Absorber enthalten. Das können die gleichen oder andere UV-Absorber sein.

Erfindungsgemäß sind diejenigen mehrschichtigen Erzeugnis bevorzugt, die ausgewählt sind aus der Gruppe bestehend aus Platten, Rohren, Profilen und Folien.

Platten können insbesondere Massivplatten sein, die insbesondere eben oder gewellt sein können. Außerdem können es Stegplatten sein, die insbesondere eben oder gewellt sein können.

Unter Stegplatten werden Platten verstanden, bei denen zwei Außenschichten durch Stege miteinander verbunden sind, so dass im Inneren der Platte Hphlräume entstehen. Stegdoppelplatten haben zwei Außenschichten und dazwischenliegende Stege. Stegdreifachplatten haben zusätzlich eine dritte innenliegende Schicht, die zu den beiden

Außenschichten parallel ist. Derartige Stegplatten sind beispielsweise beschrieben in EP-A 0 110 238. Sie werden dort mehrschichtige Hohlkammerkunststofftafel genannt. Auch EP-A 0 774 551 offenbart Stegplatten. In Figur 1 von EP-A 0 774 551 wird eine Stegdreifachplatte gezeigt. Auch EP-A 0 054 856 und EP-A 0 741 215 offenbaren Stegplatten. EP-A 0 110 238, EP-A 0 054 856, EP-A 0 741 215 und EP-A 0 774 551 werden hiermit durch Inbezugnahme in die vorliegende Patentanmeldung einbezogen.

Die Stegplatten können Stegdoppelplatten, Stegdreifachplatten, Stegvierfachplatten usw. sein. Die Stegplatten können auch unterschiedliche Profile besitzen. Außerdem können die Stegplatten auch gewellte Stegplatten sein.

Eine bevorzugte Ausführungsform der vorliegenden Erfindung ist eine zweischichtige Platte oder Folie bestehend aus der ersten und der zweiten Schicht wie oben definiert.

Eine weitere bevorzugte Ausführungsform der vorliegenden Erfindung ist eine dreischichtige Platte oder Folie bestehend aus einer Schicht als mittlere Schicht, die wie die oben definierte zweite Schicht aufgebaut ist, und aus zwei Schichten als Außenschichten, die beide aufgebaut sind wie die oben definierte erste Schicht.

Die erfindungsgemäßen mehrschichtigen Erzeugnisse können beispielsweise folgenden Aufbau haben:

a)

| |
|---|
| DOD-Co-PC (mit oder ohne UV-Absorber) |
| Anderes PC (mit oder ohne UV-Absorber) |

b)

| |
|---|
| DOD-Co-PC (mit oder ohne UV-Absorber) |
| Anderes PC (mit oder ohne UV-Absorber) |
| DOD-Co-PC (mit oder ohne UV-Absorber) |

c)

| |
|---|
| DOD-Co-PC (mit oder ohne UV-Absorber) |
| Anderes PC (mit 0-1% UV-Absorber) |
| Anderes PC (mit 0.1-20% UV-Absorber) |

In einer besonderen Ausführungsform sind die mehrschichtigen Erzeugnisse transparent.

Die erfindungsgemäßen Copolycarbonate können nach bekannten Verfahren hergestellt werden. Die erforderlichen Monomere sind bekannt. Die Monomere und zum Teil auch die Copolycarbonate sind im Handel erhältlich.

4,4-Dihydroxydiphenyl kann durch verschiedene bekannte Verfahren hergestellt werden.

Es kann hergestellt werden durch die Umesterung von Diphenyldisulfonsäure mit $OH^-$-Ionen oder durch Hydrolyse von Dibromdiphenyl oder nach dem in EP-A 0 432 782 offenbarten Verfahren. Auch JP-A 05 097 740, JP-A 0 415 235 und JP A 03 038 538 offenbarten Verfahren zur Herstellung von 4,4'-Dihydroxydiphenyl.

Ganz besonders bevorzugt sind Copolycarbonate aufgebaut aus 34-26 mol %, speziell 33-27 mol %, insbesondere 32-28 mol %, ganz speziell 31-29 mol % und besonders herausgehoben 30 mol % an Wiederholungseinheit der Formel (I), jeweils durch einen komplementären Gehalt an Wiederholungseinheit der Formel (II) ergänzt.

Bevorzugte Wiederholungseinheiten der Formel (I) sind abgeleitet von 4,4'-Dihydroxydiphenyl (DOD) und 4,4'-Dihydroxy-3,3',5,5'tetra(tert:-Butyl)diphenyl.

Bevorzugte Wiederholungseinheiten der Formel (II) sind abgeleitet von 2,2-Bis(4-hydroxyphenyl)propan, 1,1-Bis(4-hydroxyphenyl)-3,3,5-trimethylcyclohexan und 1,3-Bis [2-(4-hydroxyphenyl)-2-propyl]benzol, 1,4 -Bis(4-hydroxyphenyl) 1 -phenylethan, 1,1 -Bis(4-hydroxyphenyl)-cyclohexan, insbesondere 2,2-Bis(4-hydroxyphenyl)propan

(Bisphenol A).

Es können sowohl eine Verbindung der Formel (I), unter Bildung binärer Copolycarbonate, als auch mehrere Verbindungen der Formel (I) verwendet werden.

Ebenso können sowohl eine Verbindung der Formel (II), unter Bildung binärer Copolycarbonate, als auch mehrere Verbindungen der Formel (II) verwendet werden.

Die Edukte der Formel (I) und (II) können selbstverständlich Verunreinigungen, bedingt durch die Synthese, enthalten. Eine hohe Reinheit ist aber wünschenswert und anzustreben, daher werden diese Edukte mit der höchst möglichen Reinheit eingesetzt.

Im Folgenden wird die erste Schicht des erfindungsgemäßen mehrschichtigen Erzeugnisses auch als Coextrusionsschicht oder Coexschicht bezeichnet. Die zweite Schicht wird auch als Basisschicht bezeichnet.

Sowohl die erste Schicht des erfindungsgemäßen mehrschichtigen Erzeugnisses als auch die zweite Schicht des erfindungsgemäßen mehrschichtigen Erzeugnisses kann Additive enthalten.

Die erste Schicht des erfindungsgemäßen mehrschichtigen Erzeugnisses kann insbesondere UV-Absorber und Thermostabilisatoren enthalten.

Die UV-Absorber bzw. deren Mischungen sind bevorzugt in Konzentrationen von 0 bis 20 Gew.-% in der ersten Schicht vorhanden. Bevorzugt sind dabei 0,1 bis 20 Gew.-%, besonders bevorzugt, 2 bis 10 Gew.-%, ganz besonders bevorzugt 3 bis 8 Gew.-%. Falls zwei oder mehr derartige Schichten vorhanden sind, kann der Anteil an UV-Absorber in diesen Schichten uriterschiedlich sein.

Beispiele für UV-Absorber, die erfindungsgemäß verwendet werden können, werden im Folgenden beschrieben.

a) Benzotriazol-Derivate nach Formel (III):

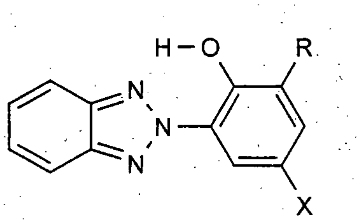

(III)

In Formel (III) sind R und X gleich oder verschieden und bedeuten H oder Alkyl oder Alkylaryl.

Bevorzugt ist dabei

Tinuvin® 329 mit X = 1,1,3,3-Tetramethylbutyl und R = H
Tinuvin® 350 mit X = tert-Butyl und R = 2-Butyl
Tinuvin® 234 mit X = R = 1,1-Dimethyl-1-phenyl

b) Dimere Benzotriazol-Derivate nach Formel (IV):

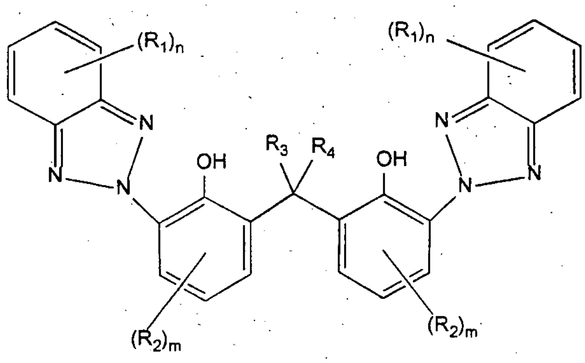

(IV)

In Formel (IV) sind $R^1$ und $R^2$ gleich oder verschieden und bedeuten H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, -$OR^5$ oder -(CO)-O-$R^5$ mit $R^5$ = H oder-$C_1$-$C_4$-Alkyl.

In Formel (IV) sind $R^3$ und $R^4$ ebenfalls gleich oder verschieden und bedeuten H, $C_1$-$C_4$-Alkyl, $C_5$-$C_6$-Cycloalkyl, Benzyl oder $C_6$-$C_{14}$-Aryl.
In Formel (IV) bedeutet m 1,2 oder 3 und n 1,2,3 oder 4.
Bevorzugt ist dabei
Tinuvin® 360 mit $R^1 = R^3 = R^4 = H$, n = 4, $R^2$ = 1,1,3,3-Tetramethylbutyl und m=1.

b1) Dimere Benzotriazol-Derivate nach Formel (V):

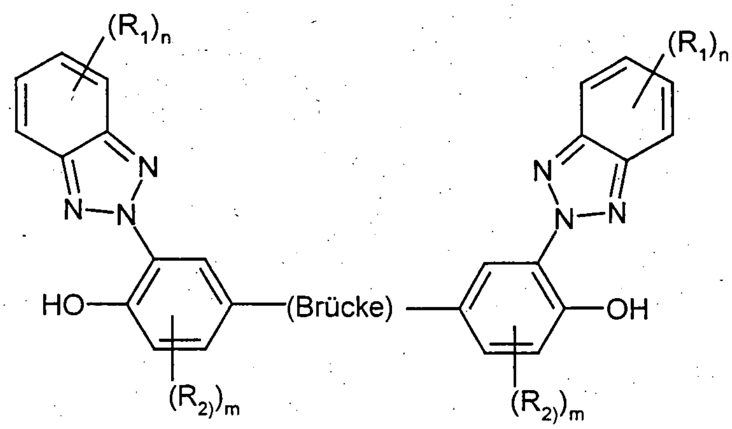

(V)

worin die Brücke

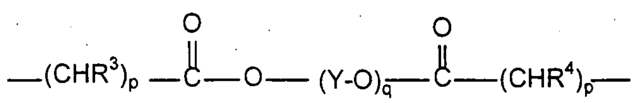

bedeutet, $R^1$, $R^2$, m und n die für Formel (IV) genannte Bedeutung haben, und worin p eine ganze Zahl von 0 bis 3 ist, q eine ganze Zahl von 1 bis 10 ist,
Y gleich $-CH_2-CH_2-$, $-(CH_2)_3-$, $-(CH_2)_4-$, $-(CH_2)_5-$, $-(CH_2)_6-$, oder $CH(CH_3)— CH_2—$ ist und $R^3$ und $R^4$ die für Formel (II) genannte Bedeutung haben.
Bevorzugt ist dabei
Tinuvin® 840 mit $R^1$ = H, n = 4, $R^2$ = tert-Butyl, m = 1, $R^2$ ist in ortho-Stellung zur OH-Gruppe angebracht, $R^3 = R^4 = H$, p = 2, Y = $-(CH_2)_5-$, q = 1.

c) Triazin-Derivate nach Formel (VI):

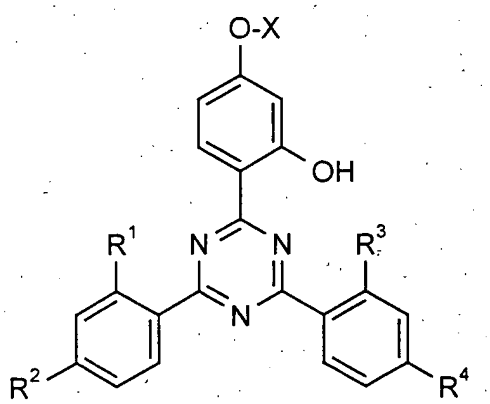

(VI)

worin $R^1$, $R^2$, $R^3$, $R^4$ in Formel (VI) gleich oder verschieden sind und H oder Alkyl oder Aryl, oder CN oder Halogen sind und X gleich Alkyl ist.
Bevorzugt ist dabei
Tinuvin® 1577 mit $R^1 = R^2 = R^3 = R^4$ = H, X = Hexyl
Cyasorb® UV-1164 mit $R^1 = R^2 = R^3 = R^4$ = Methyl, X = Octyl

d) Triazin-Derivate der Formel (VIa)

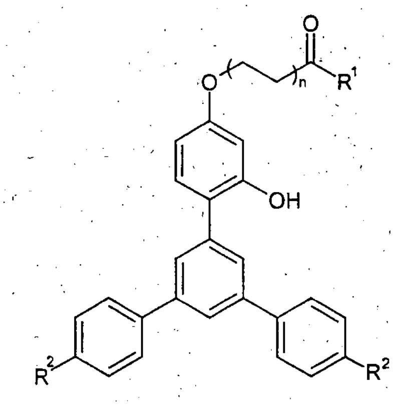

(VIa)

worin

$R^1$ gleich $C_1$-Alkyl bis $C_{17}$-Alkyl bedeutet,
$R^2$ gleich H oder $C_1$-Alkyl bis $C_4$-Alkyl oder Aryl bedeutet und
n gleich 0 bis 20 ist.

e) Diarylcyanoacrylate der Formel (VII):

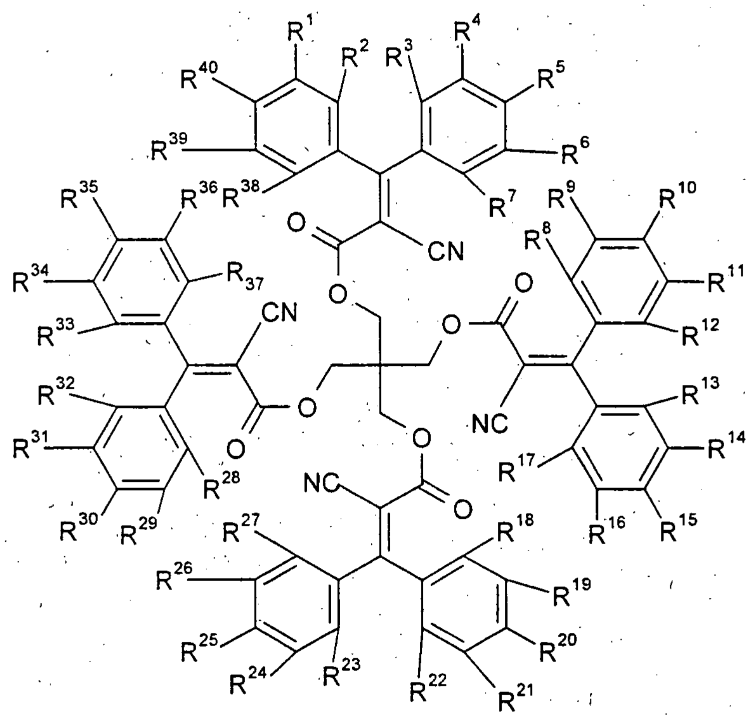

(VII)

worin $R^1$ bis $R^{40}$ gleich oder verschieden sein können und H, Alkyl, CN oder Halogen bedeuten. Bevorzugt ist dabei Uvinul® 3030 mit $R^1$ bis $R^{40}$ = H.

f) Diarylcyanoacrylate der Formel (VIII):

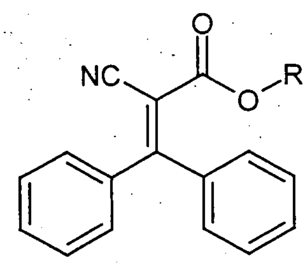

(VIII)

worin R gleich $C_2$-Alkyl bis $C_{10}$-Alkyl oder Aryl ist.

Bevorzugt dabei sind Uvinul® 3035 mit $R=C_2H_5$ und Uvinul® 3039 mit $R=CH_2CH(C_2H_5)C_4H_9$.

Die genannten UV-Absorber sind teilweise kommerziell erhältlich.

Zusätzlich können die Coexschichten und die Basis-Schichten neben den UV-Stabilisatoren noch andere übliche Verarbeitungshilfsmittel insbesondere Entformungsmittel und Fließmittel sowie den in Polycarbonaten üblichen Stabilisatoren insbesondere Thermostabilisatoren sowie Farbmitteln und optische Aufheller und anorganische Pigmente enthalten.

Besonders geeignet sind P-haltige Thermostabilisatoren wie Phosphine, Phosphite und Phosphonite. Besonders geeignet sind zum Beispiel Triphenylphosphin, Diphenylalkylphosphite, Phenyldialkylphosphite, Tris(nonylphenyl) phosphit, Trilaurylphosphit, Trioctadecylphosphit, Distearylpentaerythritdiphosphit, Tris(2,4-ditert-butylphenyl)phosphit, Diisodecylpentaerythritdiphosphit, Bis(2,4-di-tertbutylphenyl)pentaerythritdiphosphit, Bis(2,6-di-tert-butyl-4-methylphenyl)pentaerythritdiphosphit, Diisodecyloxypentaerythritdiphosphit, Bis(2,4-di-tert-butyl-6-methylphenyl)pentaerythritdiphosphit, Bis(2,4,6-tris(tert-butylphenyl)pentaerythritdiphosphit, Tristearylsorbittriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluor-2,4,8,10-tetra-tert-butyl-12-methyldibenz[d,g]- 1,3,2-dioxaphosphocin, 2,2',2''-Nitrilo[triethyltris(3,3', 5,5'tetra-tert-butyl-1,1'-biphenyl-2,2'-diyl)phosphit], 2-Ethyl-hexyl(3,3',5,5'-tetra-tertbutyl-1,1'-biphenyl-2,2'-diyl)phosphit, 5-Butyl-5-ethyl-2-(2,4,6-tri-tert-butylphenoxy)-1,3,2-dioxaphosphiran. Es können einzelne dieser Verbindungen oder Gemische derselben eingesetzt werden.

Besonders bevorzugt sind Tris(2,4-di-tert-butylphenyl)phosphit (Irgafos® 168, Ciba-Geigy), Triphenylphosphin, oder (2,4,6-Tri-tert.-butyl-phenyl)-(2-butyl-2-ethyl-propan-1,3-diyl)phosphit (Ultranox 641®, GE Specialty Chemicals).

Beispiele geeigneter Phosphite und Phosphonite sind auch:

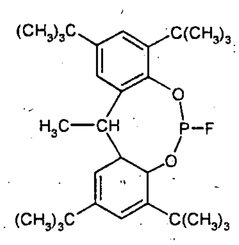
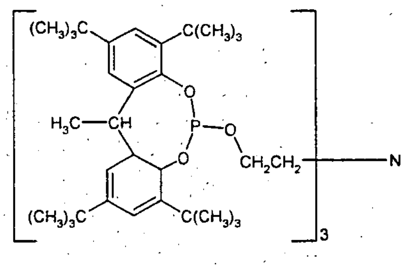

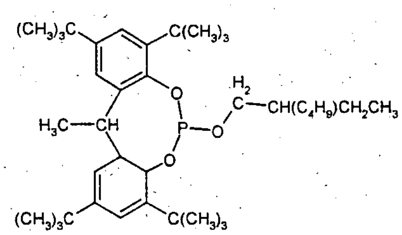

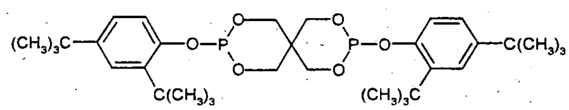

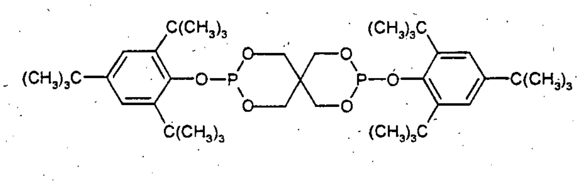

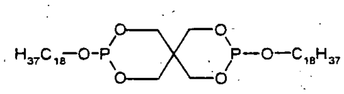

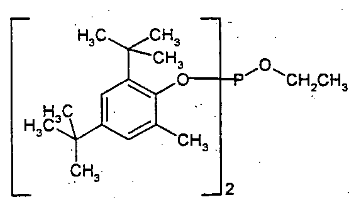

Polycarbonate für die zweite Schicht der erfindungsgemäßen mehrschichtigen Erzeugnisse sind alle bekannten Polycarbonate, die nicht ausreichend chemikalienresistent sind.

Dies können Homopolycarbonate, Copolycarbonate und thermoplastische Polyestercarbonate sein.

Sie haben bevorzugt mittlere Molekulargewichte $\overline{M}_w$ von 18.000 bis 40.000, vorzugsweise von 26.000 bis 36.000 und insbesondere. von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Zur Herstellung von Polycarbonaten sei beispielhaft auf "Schnell, Chemistry and Physics of Polycarbonats, Polymer Reviews, Vol. 9, Interscience Publishers, New York, London, Sydney 1964", und auf "D.C. PREVORSEK, B. T. DEBONA and Y. KESTEN, Corporate Research Center, Allied Chemical Corporation, Moristown, New Jersey 07960, 'Synthesis of Poly(ester)carbonate Copolymers' in Journal of Polymer Science, Polymer Chemistry Edition, Vol. 19, 75-90 (1980)", und auf "D. Freitag, U. Grigo, P.R. Müller, N. Nouvertne, BAYER AG, 'Polycarbonates' in Encyclopedia of Polymer Science and Engineering, Vol. 11, Second Edition, 1988, Seiten 648-718" und schließlich auf "Dres. U. Grigo, K. Kircher und P.R. Müller 'Polycarbonate' in Becker/Braun, Kunststoff-Handbuch, Band 3/1, Polycarbonate, Polyacetale, Polyester, Celluloseester, Carl Hanser Verlag München, Wien 1992, Seiten 117-299" verwiesen.

Die Herstellung der Polycarbonate erfolgt vorzugsweise nach dem Phasengrenzflächenverfahren oder dem Schmelze-Umesterungsverfahren und wird im Folgenden beispielhaft an dem Phasengrenzflächenverfahren beschrieben.

Als Ausgangsverbindungen bevorzugt einzusetzende Verbindungen sind Bisphenole der allgemeinen Formel

$$HO\text{-}Z\text{-}OH,$$

worin Z ein divalenter organischer Rest mit 6 bis 30 Kohlenstoffatomen ist, der eine oder mehrere aromatische Gruppen enthält.

Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und $\alpha,\alpha'$-Bis(hydroxyphenyl)- diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), 4,4-(para-Phenylendiisopropyl) diphenol, 1,1 -Bis-(4-hydroxyphenyl)-3,3,5-trimethylcyclohexan (BP-TMC) sowie gegebenenfalls deren Gemische.

Bevorzugt werden die erfindungsgemäß einzusetzenden Bisphenolverbindungen mit Kohlensäureverbindungen, insbesondere Phosgen, oder beim Schmelzeumesterungsprozess mit Diphenylcarbonat bzw. Dimethylcarbonat, umgesetzt.

Polyestercarbonate werden bevorzugt durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol.-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden bevorzugt die in DE-A 4 238 123 genannten Katalysatoren verwendet.

Die Polycarbonate können durch den Einsatz geringer Mengen Verzweiger bewusst und köntrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1 -Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenylisopropyl)-phenoxy)-methan; $\alpha,\alpha,'\alpha''$-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1 -Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Als Kettenabbrecher werden bevorzugt Phenole wie Phenol, Alkylphenole wie Kresol und 4-tert.-Butylphenol,

Chlorphenol, Bromphenol , Cumylphenol oder deren Mischungen verwendet in Mengen von 1 - 20 Mol-%, bevorzugt 2 - 10 Mol-% je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Die Herstellung der Polycarbonate nach dem Schmelzeumesterungsprozess ist in DE-A 423 8 123 beispielhaft beschrieben.

Erfindungsgemäß bevorzugte Polycarbonate für die zweite Schicht des erfindungsgemäßen mehrschichtigen Erzeugnisses sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Das Homopolycarbonat auf Basis von Bisphenol A ist besonders bevorzugt.

Das Polycarbonat kann Stabilisatoren enthalten. Geeignete Stabilisatoren sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Diese Stabilisatoren können in allen Schichten des erfindungsgemäßen mehrschichtigen Erzeugnisses vorhanden sein. Also sowohl in der sogenannten Basis als auch in der oder in den sogenannten Coexschichten. In jeder Schicht können unterschiedliche Additive bzw. Konzentrationen an Additiven vorhanden sein.

Ferner kann das erfindungsgemäße mehrschichtige Erzeugnis 0,01 bis 0,5 Gew.-% der Ester oder Teilester von ein- bis sechswertigen Alkoholen, insbesondere des Glycerins, des Pentaerythrits oder von Guerbetalkoholen enthalten.

Einwertige Alkohole sind beispielsweise Stearylalkohol, Palmitylalkohol und Guerbetalkohole.

Ein zweiwertiger Alkohol ist beispielsweise Glycol.

Ein dreiwertiger Alkohol ist beispielsweise Gylcerin.
Vierwertige Alkohole sind beispielsweise Pentaerythrit und Mesoerythrit.
Fünfwertige Alkohole sind beispielsweise Arabit, Ribit und Xylit.
Sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen $C_{10}$ bis $C_{36}$-Monocarbonsäuren und gegebenenfalls Hydroxy-Monocarbonsäuren, vorzugsweise mit gesättigten, aliphatischen $C_{14}$ bis $C_{32}$-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt <60 % unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Bevorzugte gesättigte, aliphatische Monocarbonsäuren mit 14 bis 22 C-Atomen sind beispielsweise Myristinsäure, Palmitinsäure, Stearinsäure, Hydroxystearinsäure, Arachinsäure und Behensäure.

Besonders bevorzugt sind gesättigte, aliphatische Monocarbonsäuren wie Palmitinsäure, Stearinsäure und Hydroxystearinsäure.

Die gesättigten, aliphatischen $C_{10}$ bis $C_{36}$-Carbonsäuren und die Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester'des Pentaerythrits und des Glycerins mit Stearinsäure und Palmitinsäure.

Besonders bevorzugt sind auch Ester von Guerbetalkoholen und des Glycerins mit Stearinsäure und Palmitinsäure und gegebenenfalls Hydroxystearinsäure.

Diese Ester können sowohl in der Basis als auch in der oder in den Coexschichten vorhanden sein. In jeder Schicht können unterschiedliche Additive bzw. Konzentrationen vorhanden sein.

Die erfindungsgemäßen mehrschichtigen Erzeugnisse können Antistatika enthalten.

Beispiele für Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Diese Antistatika können sowohl in der Basis als auch in der oder in den Coexschichten vorhanden sein. In

jeder Schicht können unterschiedliche Additive bzw. Konzentrationen vorhanden sein. Sie werden bevorzugt in der oder in den Coex-Schichten verwendet.

Die erfindungsgemäßen mehrschichtigen Erzeugnisse können organische Farbstoffe, anorganische Farbpigmente, Fluoreszenzfarbstoffe und besonders bevorzugt optische Aufheller enthalten.

Diese Farbmittel können sowohl in der Basis als auch in der oder in Aden Coexschichten vorhanden sein. In jeder Schicht können unterschiedliche Additive bzw. Konzentrationen vorhanden sein.

Alle für die Herstellung der erfindungsgemäßen mehrschichtigen Erzeugnisse verwandten Formmassen, deren Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in die erfindungsgemäßen Formmassen insbesondere der UV-Absorber und weiterer vorgenannter Additive erfolgt bevorzugt in bekannter Weise durch Vermischen von Polymergranulat mit den Zusätzen bei Temperaturen von etwa 200 bis 330°C in üblichen Aggregaten wie Innenknetern, Einschneckenextrudern und Doppelwellenextrudern beispielsweise durch Schmelzecompoundierung oder Schmelzeextrusion oder durch Vermischen der Lösungen des Polymers mit Lösungen der Additive und anschließende Verdampfung der Lösungsmittel in bekannter Weise. Der Anteil der Additive in der Formmasse kann in weiten Grenzen variiert werden und richtet sich nach den gewünschten Eigenschaften der Formmasse. Der Gesamtanteil der Additive in der Formmasse beträgt bevorzugt etwa bis zu 20 Gew.-%, vorzugsweise 0,2 bis 12 Gew.-%, bezogen auf das Gewicht der Formmasse.

Die Einarbeitung der UV-Absorber in die Formmassen kann beispielsweise auch geschehen durch Vermischen von Lösungen der UV-Absorber und gegebenenfalls weiterer vorgenannter Additive mit Lösungen der Kunststoffe in geeigneten organischen Lösungsmitteln wie $CH_2Cl_2$, Halogenalkanen, Halogenaromaten, Chlorbenzol und Xylolen. Die Substanzgemische werden dann bevorzugt in bekannter Weise via Extrusion homogenisiert; die Lösungsgemische werden bevorzugt in bekannter Weise durch Ausdampfen des Lösungsmittels und anschließender Extrusion entfernt, beispielsweise compoundiert.

Wie die Beispiele belegen, bietet die Verwendung der erfindungsgemäßen Coextrusionsformmassen einen signifikanten Vorteil auf beliebigen, nicht ausreichend chemikalienresistenten Polycarbonat-Formmassen als Basismaterial.

Die Bearbeitung der erfindungsgemäßen mehrschichtigen Erzeugnisse z.B. durch Tiefziehen oder durch Oberflächenbearbeitungen, wie z.B. Ausrüstung mit Kratzfestlacken, wässerspreitenden Schichten und ähnliches sind möglich und die durch diese Verfahren hergestellten Erzeugnisse sind ebenfalls Gegenstand der vorliegenden Erfindung.

Die Coextrusion als solche ist literaturbekannt (siehe beispielsweise EP-A 0 110 221 und EP-A 0 110 238). Im vorliegenden Fall wird vorzugsweise wie folgt verfahren. An einem Coextrusionsadapter sind Extruder zur Erzeugung der Kernschicht und Deckschicht(en) angeschlossen. Der Adapter ist so konstruiert, dass die die Deckschicht (en) formende Schmelze als dünne Schicht haftend auf die Schmelze der Kernschicht aufgebracht werden. Der so erzeugte mehrschichtige Schmelzestrang wird dann in der anschließend angeschlossenen Düse in die gewünschte Form (Stegoder Massivplatte) gebracht. Anschließend wird in bekannter Weise mittels Kalandrierung (Massivplatte) oder Vakuumkalibrierung (Stegplatte) die Schmelze unter kontrollierten Bedingungen abgekühlt und anschließend abgelängt. Gegebenenfalls kann nach der Kalibrierung ein Temperofen zur Eliminierung von Spannungen angebracht werden. Anstelle des vor der Düse angebrachten Adapters kann auch die Düse selbst so ausgelegt sein, dass dort die Zusammenführung der Schmelzen erfolgt.

Die Erfindung wird durch die folgenden Beispiele weiter erläutert ohne auf diese beschränkt zu sein. Die erfindungsgemäßen Beispiele geben lediglich bevorzugte Ausführungsformen der vorliegenden Erfindung wieder.

## Beispiele

Als DOD-CoPC wurde im Phasengrenzflächenverfahren ein Polycarbonat mit 30 Mol-% Dihydroxydiphenyl (DOD) und 70 Mol-% Bisphenol A hergestellt. Als Kettenabbrecher wurde 4-tert.-Butylphenol verwendet. Das Granulat wies einen MVR (gemessen nach ISO 1133 bei 300°C und 1.2 kg Belastung) von 7.1 auf.

4 mm dicke Massivplatten, A bis D, wurden aus folgenden Zusammensetzungen (Formmassen) erhalten: Als Basismaterial für die Platten A bis D wurde Makrolon® 3103 (lineares Bisphenol-A Homopolycarbonat der Firma Bayer AG, Leverkusen, Deutschland mit einem Schmelzflussindex (MFR) von 6,5 g/10 min bei 300°C und 1,2 kg Belastung (gemessen nach ISO 1133)) verwendet. Makrolon® 3103 enthält UV-Absorber.

Coextrudiert wurden die Platten A und B mit den in der Tabelle angegebenen Zusammensetzungen (Compounds) auf Basis von Makrolon® 3100 (lineares Bisphenol-A Homopolycarbonat der Firma Bayer AG, Leverkusen, Deutschland mit einem Schmelzflussindex (MFR) gemäß ISO 1133 von 6,5 g/10 min bei 300°C und 1,2 kg Belastung).

Coextrudiert wurden die Platten C und D mit den in der Tabelle angegebenen Zusammensetzungen (Compounds) auf Basis des oben erwähnten DOD-CoPC.

Die Dicke der Coextrusionsschicht betrug jeweils etwa 50 µm.

Die folgende Tabelle fasst den Aufbau der Platten zusammen:

| **Platte** | **Coextrusionsschicht** |
|---|---|
| A | Makrolon 3100 |
| B | Compound aus Makrolon 3100 + 0.25 Gew.-% Tinuvin 329*) |
| C | DOD-CoPC |
| D | Compound aus DOD-CoPC + 0.25 Gew.-% Tinuvin 329*) |

*) Tinuvin® 329 ist 2-(2-Hydroxy-5-tert-octylphenyl)-benzotriazol und ist im Handel erhältlich als Tinuvin® 329 der Firma Ciba Spezialitätenchemie, Lampertheim, Deutschland

Die verwendeten Maschinen und Apparate zur Herstellung der mehrschichtigen Massivplatten werden im folgenden beschrieben:

Die Einrichtung bestand aus:

- dem Hauptextruder mit einer Schnecke der Länge 33 D und einem Durchmesser von 60 mm mit Entgasung
- dem Coexadapter (Feedblocksystem)
- einem Coextruder zum Aufbringen der Deckschicht mit einer Schnecke der Länge 25 D und einem Durchmesser von 30 mm
- der speziellen Breitschlitzdüse mit 350 mm Breite
- dem Glättkalander
- der Rollenbahn
- der Abzugseinrichtung
- der Ablängvorrichtung (Säge)
- dem Ablagetisch.

Das Polycarbonatgranulat des Basismaterials wurde dem Fülltrichter des Hauptextruders zugeführt, das Coextrusionsmaterial dem des Coextruders. Im jeweiligen Plastifiziersystem (Zylinder/Schnecke) erfolgte das Aufschmelzen und Fördern des jeweiligen Materials. Beide Materialschmelzen wurden im Coexadapter zusammengeführt und bildeten nach Verlassen der Düse und Abkühlen im Kalander einen Verbund. Die weiteren Einrichtungen dienten dem Transport, Ablängen und Ablegen der coextrudierten Platten.

Die erhaltenen Platten wurden anschließend nach dem unten angegebenen Test auf ihre Resistenz gegen verschiedene im Haushalt vorkommende Chemikalien getestet:

Eine 110 mm x 35 mm x 4 mm große Platte wurde so mit doppelseitigem Klebeband (5 mm breit) beklebt, dass eine 4,5 cm x 2.5 cm große Kammer entstand. Nach dem Aufspannen auf eine Randfaserdehnungsschablone (Kennzeichnung: ".99"; Randfaserdehnung 2 % bei 4 mm dicken Platten nach DIN 53449 Teil 3) wurde ein mit dem Prüfmedium getränktes 3 cm x 1 cm großes Stück Baumwolle mittig in die Kammer gelegt und mit Aluminiumfolie verschlossen. Dadurch, dass die Platten breiter waren als die Schablone, ließen sich Beginn und Verlauf der Rissbildung durch die Rückseite gut beobachten.

Die nachfolgende Tabelle zeigt, dass Platten, die mit den erfindungsgemäßen Coextrusionsformmassen coextrudiert waren (C und D), eine bessere Resistenz gegen im Haushalt vorkommende Chemikalien besitzen als die Vergleichsplatten A und B.

Der Vergleich mit dem Test gegen Super-Benzin zeigt, dass die erfindungsgemäßen Platten überraschenderweise gegen Haushaltschemikalien eine höhere Resistenz aufweisen als gegen Benzin.

| | Einwirkzeit | Platte A | Platte B | Platte C | Platte D |
|---|---|---|---|---|---|
| Test gegen Super-Benzin1) | 20 min | Sehr viele starke Risse | Sehr viele starke Risse | Sehr viele starke Risse | Sehr viele starke Risse |
| Test gegen Hautcreme2) | 30 min | Feine Risse | Feine Risse | Keine Risse | Keine Risse |

1) Super-Benzin der Firma Shell

2) Hautcreme der Firma Physioderm GmbH & Co.KG

(fortgesetzt)

| | Einwirkzeit | Platte A | Platte B | Platte C | Platte D |
|---|---|---|---|---|---|
| Test gegen kaltgepresstes Olivenöl[3] | 2 h | Einige stärkere Risse | Einige stärkere Risse | Keine Risse | Keine Risse |
| Test gegen Parfüm[4] | 2 h | Gebrochen | Gebrochen | Mehrere tiefe Risse | Mehrere tiefe. Risse |

3) Hersteller: Oleificio R.M. S.P.A. Lucca/Italien (Handelsmarke der Firma TIP)

4) Jil Sander Woman III (enthält unter anderem Wasser, Ethanol und etherische Öle)

**Patentansprüche**

**1.** Ein mehrschichtiges Erzeugnis umfassend eine erste und eine zweite Schicht, wobei die erste Schicht ein Copolycarbonat enthält und wobei dieses Copolycarbonat zu 0,1 Mol-% bis 46 Mol-% eine oder mehrere verschiedene Wiederholungseinheiten der Formel (I)

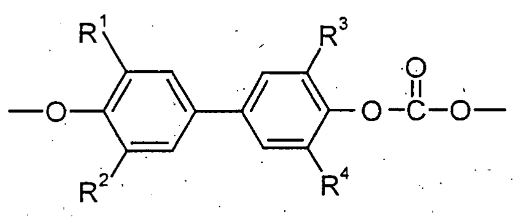

(I)

enthält,
worin $R^1$ bis $R^4$ unabhängig voneinander für H, $C_1$-Alkyl bis $C_4$-Alkyl, Phenyl, substituiertes Phenyl oder Halogen stehen, und zu 99,9 Mol-% bis 54 Mol-% eine oder mehrere verschiedene Wiederholungseinheiten der Formel (II)

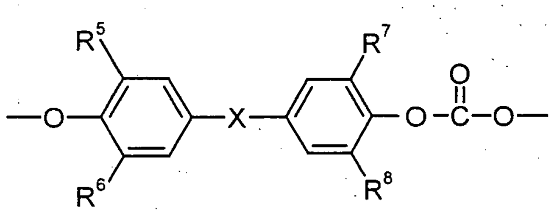

(II)

enthält,
worin $R^5$ bis $R^8$ unabhängig voneinander H, $CH_3$, Cl oder Br sind und X $C_1$-Alkylen bis $C_5$-Alkylen, $C_2$-Alkyliden bis $C_5$-Alkyliden, $C_5$-Cycloalkylen bis $C_6$-Cycloalkylen, oder $C_5$-Cycloalkyliden bis $C_{10}$-Cycloalkyliden ist, und wobei die Summe der Menge der Wiederholungseinheiten nach Formel (I) und nach Formel (II) 100 Mol-% beträgt, und wobei die zweite Schicht ein Polycarbonat enthält, das weniger chemikalienresistent ist als das Copolycarbonat, das in der ersten Schicht enthalten ist.

**2.** Das mehrschichtige Erzeugnis nach Anspruch 1, wobei die Wiederholungseinheit den der Formel (I) abgeleitet sind von 4,4'-Dihydroxydiphenyl (DOD), und wobei die Wiederholungseinheiten der Formel (II) abgeleitet sind von 2,2-Bis(4-hydroxyphenyl)propan, und wobei der Anteil der Wiederholungseinheiten der Formel (I) an dem Copolycarbonat 26 bis 34 Mol-% beträgt, und wobei der Anteil der Wiederholungseinheiten der Formel (II) an dem Copolycarbonat 74 bis 66 Mol-% beträgt, und wobei die Summe der Menge der Wiederholungseinheiten nach Formel (I) und nach Formel (II) 100 Mol-% beträgt.

**3.** Das mehrschichtige Erzeugnis nach einem der Ansprüche 1 bis 2, wobei die zweite Schicht ein Polycarbonat

enthält, das ausgewählt ist aus der Gruppe bestehend aus dem Homopolycarbonat auf Basis von Bisphenol A, dem Homopolycarbonat auf Basis von 1,1-Bis-(4-hydroxyphenyl)-3,3,5-trimethylcyclohexan und einem Copolycarbonat auf Basis der beiden Monomere Bisphenol A und 1,1-Bis-(4-hydroxyphenyl)-3,3,5-trimethyl-cyclohexan.

**4.** Das mehrschichtige Erzeugnis nach einem der Ansprüche 1 bis 2, wobei die zweite Schicht das Homopolycarbonat auf Basis von Bisphenol A enthält.

**5.** Das mehrschichtige Erzeugnis nach einem der Ansprüche 1 bis 4 ausgewählt aus der Gruppe bestehend aus Platten, Rohren, Profilen und Folien.

**6.** Das mehrschichtige Erzeugnis nach einem der Ansprüche 1 bis 5, wobei die erste Schicht zusätzlich 0,1 bis 20 Gew.-% UV-Absorber enthält.

**7.** Das mehrschichtige Erzeugnis nach Anspruch 6, wobei der UV-Absorber ausgewählt ist aus der Gruppe bestehend aus den drei Verbindungen der folgenden Formeln

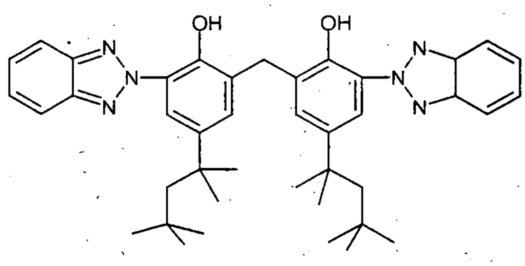

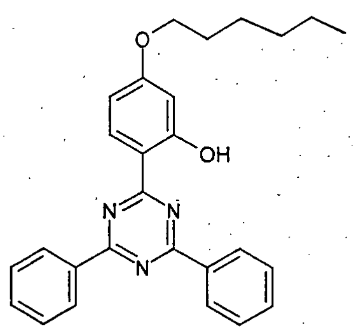

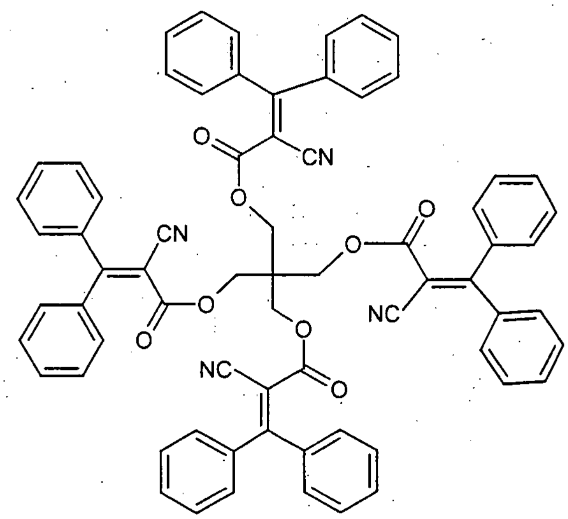

8. Ein Verfahren zur Herstellung des mehrschichtigen Erzeugnisses nach einem der Ansprüche 1 bis 7 durch Coextrusion.

9. Ein Erzeugnis, das dass mehrschichtige Erzeugnis nach einem der Ansprüche 1 bis 7 enthält.

10. Das Erzeugnis nach Anspruch 9 ausgewählt aus der Gruppe bestehend aus Verscheibung, Schutzscheibe, Wintergarten, Veranda, Carport, Bushaltestelle, Reklametafel, Vitrine, Fenster, Trennwand, Kassenhaus, Sichtscheibe, Display, Theke, Überdachung und Folie.